# EUROPÄISCHE PATENTANMELDUNG

(11) **EP 0 701 854 A1**
(43) Veröffentlichungstag der Anmeldung: **20.03.1996**
(21) Anmeldenummer: 95113792.6
(22) Anmeldetag: 01.09.1995
(51) Int. Cl.: B01D 46/52, B01D 27/06, B01D 29/07

(54) **Verfahren zur Herstellung eines Filtermediums**

(30) Priorität: 16.09.1994 DE 4433129
(71) Anmelder: W.L. GORE & ASSOCIATES GmbH, D-85640 Putzbrunn (DE)
(72) Erfinder: Franz, Andreas, D-48159 Münster (DE)
(74) Vertreter: Klunker . Schmitt-Nilson . Hirsch

(57) **Zusammenfassung**

Bei einem Verfahren zur Herstellung eines Filtermediums (1; 6; 8; 30), insbesondere in der Form eines plissierten Faltenbalges für eine Filterpatrone zur Staubabscheidung, wird auf wenigstens einer Oberfläche des Filtermediums eine Prägung, bestehend aus einer Vielzahl von erhabenen, vorzugsweise noppenartig oder rippenartig ausgebildeten Prägestellen (3; 9; 32) aufgebracht. Außerdem wird die jeweilige Oberfläche des Filtermediums (1; 6; 8; 30) im Bereich der jeweiligen Prägestellen (3; 9; 32) einer zusätzlichen Behandlung durch Auftragen einer Schicht aus einer aushärtbaren oder austrockenbaren Überzugsmasse (4, 33) und/oder durch Anwendung von Wärme unterzogen, so daß im Bereich dieser behandelten Prägestellen (3; 9; 32) eine erhöhte mechanische Widerstandsfähigkeit/Beanspruchbarkeit/Abriebfestigkeit erzielt wird. Aufgrund dieses Verfahrens zum Herstellen eines Filtermediums ist es möglich, insbesondere ein aus mechanisch empfindlichen Materialien, wie z.B. thermoplastischen Materialien oder Vliesstoffen aus synthetischen Fasern, bestehendes Filtermedium zu schaffen, welches auf wenigstens einer seiner Oberflächen zum Zwecke der ausreichenden Abstandshaltung der Falten der Filterpatrone im Abreinigungsprozeß mit einer Prägung versehen werden kann, wobei dafür gesorgt wird, daß trotz aufgebrachter Prägung an den gegenseitigen Berührungspunkten dieser erhabenen Prägestellen kein Verschleiß des Filtermaterials erfolgen kann, d.h. bei der Anströmung mit dem zu reinigenden Gas und bei der Abreinigung im Bereich der gegenseitigen Berührungspunkte wird ein Materialverschleiß und Abrieb des Filtermaterials verhindert.

## Beschreibung

Die Erfindung betrifft ein Verfahren zur Herstellung eines Filtermediums, wobei auf wenigstens eine Oberfläche des Filtermediums eine Prägung in Form einer Vielzahl von erhabenen, insbesondere noppen- oder rippenartigen Prägestellen aufgebracht und das Filtermedium zu einem plissierten Faltenbalg für eine Filterpatrone zur Staubabscheidung geformt wird.

Filterpatronen werden in den letzten Jahren verstärkt in der Industrieentstaubung eingesetzt. Sie bestehen im wesentlichen aus einem Stützgitter, einem Filtermedium in Form eines plissierten Faltenbalges, der in Form eines Zylinders um das Stützgitter herum angeordnet ist, welcher mit einem unteren geschlossenen Abschlußteil und einem oberen Abschlußteil mit einem zentralen Auslaß versehen ist, wobei der Faltenbalg an den beiden Abschlußteilen staubdicht befestigt ist.

Es ist bekannt, für derartige Filterpatronen als Filtermedien hauptsächlich Filterpapiere oder thermisch verfestigte Vliesstoffe zu verwenden, wobei, um eine hinreichend dimensionierte Filterfläche in einer Filterpatrone unterzubringen, es in erster Linie auf das Zusammenwirken von Filtermaterial, Plissiertiefe und Faltenanzahl ankommt. Einerseits wird von dem Material des Filtermediums eine ausreichend hohe Steifigkeit gefordert, so daß sich die Falten im Abreinigungsprozeß nicht unmittelbar aufeinander oder aneinander legen können, wodurch die nutzbare Filterfläche unter Umständen erheblich reduziert werden könnte, auf der anderen Seite muß das Material ausreichend beweglich sein, damit durch die Relativbewegung zwischen der Oberfläche des Filtermediums und der Staubschicht die Abreinigung unterstützt und auftretende Kräfte ohne Beschädigungen aufgenommen werden können. Zu diesem Zweck ist es bekannt, das gefaltete Filtermaterial durch unterschiedliche Abstandshaltertechniken zu Fixieren. Das Einhalten der Abstände ist von ganz wesentlicher Bedeutung, weil die durch Aneinanderlegen der Falten des plissierten Faltenbalges verlorengegangene Filteroberfläche zu einer Verschlechterung der Abscheidung und zu einer Druckverlusterhöhung wegen ungenügender Abreinigung der Restfilterfläche führt.

Es ist ferner bekannt, daß bei Filterpapieren, die wegen ihrer relativ hohen Materialsteifigkeit häufig zum Einsatz kommen, eine Abstandshaltung in der Regel durch Aufbringen einer Prägung auf das Filterpapier erreicht wird, was z.B. gleichzeitig mit dem Plissiervorgang durchgeführt werden kann. Nach diesem Arbeitsgang wird das Filterpapier beispielsweise in einem entsprechenden Ofen ausgehärtet, wodurch eine dauerhafte Prägung im Material erzielt wird. Im Anschluß daran wird das Filterpapier in der Weise in die Filterpatrone eingebaut, daß die erhabenen Stellen der Prägung von je zwei Falten des plissierten Faltenbalges aneinanderliegen und die Abstandshaltung bewirken.

Wie sich jedoch herausgestellt hat, weist die Prägung bei Filterpapier gewisse Nachteile auf, und zwar in erster Linie deswegen, weil das Filterpapier an den entsprechenden Stellen durch die Prägung sehr stark beansprucht wird, so daß bereits bei relativ geringen Materialschwankungen die Gefahr auftritt, daß schadhafte "Noppen" eine neue Filterpatrone unbrauchbar machen oder deren Betriebszeit sehr stark herabsetzen.

Darüber hinaus ist es bekannt, als Filtermaterialien für die oben erläuterten Filterpatronen auch andere Werkstoffe, wie z.B. thermoplastisches Material oder Vliesstoffe aus synthetischen Fasern zu verwenden, wobei auch hier Maßnahmen ergriffen werden müssen, um die geforderte Abstandshaltung zu gewährleisten.

Es ist nun festgestellt worden, daß die wie oben im Zusammenhang mit Papierfiltern beschriebene Prägung nicht bei Filtermedien aus mechanisch empfindlichen Materialien, wie z.B. expandiertem PTFE eingesetzt werden kann, weil an den Berührungspunkten derartiger Erhebungen oder Noppen, die durch Prägung erzeugt sind, ein Materialverschleiß aufgrund der Reibung zwischen den einzelnen Falten des plissierten Faltenbalges auftritt, so daß hierdurch das Rückhaltevermögen des Filtermediums in derartigen Bereichen negativ beeinflußt wird.

Mit Rücksicht auf die wie oben geschilderten Gegebenheiten liegt der vorliegenden Erfindung nunmehr die Aufgabe zugrunde, das Verfahren der eingangs erläuterten Art dahingehend weiterzubessern, daß für die zur Abstandshaltung dienenden Prägestellen gleichzeitig ein Verschleißschutz vorgesehen wird, derart, daß bei Anwendung des resultierenden Filtermediums trotz aufgebrachter Prägung an den gegenseitigen Berührungspunkten der erzeugten noppen- oder rippenartigen Prägestellen kein Materialverschleiß erfolgt.

Diese Aufgabe wird erfindungsgemäß durch die Verfahrensschritte gelöst, daß zur Verbesserung der Abriebfestigkeit im Bereich der Prägestellen ausschließlich diese mit einer aushärtbaren/austrockenbaren Überzugsmasse beschichtet und/oder einer Behandlung durch Anwendung von Wärme unterworfen werden.

Aufgrund dieses erfindungsgemäßen Herstellungsverfahrens wird erreicht, daß ein Verschleißschutz gleichsam in Form einer Versiegelung ausschließlich im Bereich der Prägestellen erzeugt wird, während die restliche Oberfläche des Filtermediums unbehandelt, d.h. insbesondere unbeschichtet bleibt und somit für den beabsichtigten Filterzweck voll zur Verfügung steht. Andererseits wird im Bereich der Prägestellen aufgrund deren erfindungsgemäß vorgesehener Behandlung bei der Anströmung des Filtermediums mit dem zu reinigenden Gas sowie bei der Abreinigung im Bereich der gegenseitigen Berührungspunkte ein Materialverschleiß, d.h. ein Abrieb des Filtermaterials, vollständig verhindert.

Mit anderen Worten, trotz der erzielten erhöhten Abriebfestigkeit im Bereich der auf wenigstens einer Oberfläche des Filtermediums vorhandenen Prägestellen ist die Effizienz des resultierenden Filtermediums bzw. der aus dem Filtermedium gebildeten Filterpatrone zur Staubabscheidung voll gewährleistet.

Im Rahmen des vorliegenden erfindungsgemäßen Verfahrens können als aushärtbare oder austrockenbare Überzugsmassen verschiedene Werkstoffe eingesetzt werden.

Beispielsweise können als Überzugsmassen Kleber, insbesondere Einkomponenterkleber, wie etwa Polyurethan oder Acrylate, oder Mehrkomponenterkleber, wie etwa Epoxyharze, verwendet werden. Kleber dieser Art können beispielsweise mittels einer Düse aufgebracht werden und erhärten z.B. durch die Zufuhr von Wärme, UV-Bestrahlung oder Elektronenbestrahlung, durch Luftfeuchtigkeit oder durch eine zeitlich ablaufende, chemische Reaktion.

Darüber hinaus besteht auch noch die Möglichkeit, daß als Überzugsmasse ein durch Abkühlung aushärtendes, thermoplastisches Material, wie z.B. Polyethylen, Polypropylen, Polyester, oder ein Hochtemperatur-Thermoplast, wie z.B. Fluorethylenpropylen oder Perfluoralkoxy, verwendet wird.

Ferner ist es möglich, als Überzugsmasse vorgefertigte Kleber- oder Kunststoff-Netze zu verwenden, welche entsprechend der Lage und Verteilung der Prägestellen auf die Oberfläche des Filtermediums aufgebracht und anschließend durch Reaktivierung mittels Wärme fixiert werden.

Im Rahmen des vorliegenden erfindungsgemäßen Verfahrens besteht ferner die Möglichkeit, als Überzugsmassen Silikon, eine Heizschmelzmasse oder einen Lack zu verwenden.

Ferner kann im Rahmen des vorliegenden Verfahrens noch vorgesehen sein, daß die mit der Überzugsmasse überzogenen Prägestellen anschließend einer zusätzlichen thermischen Behandlung unterworfen werden, um hierdurch ein Aushärten oder Austrocknen der aufgetragenen Überzugsmasse zu begünstigen und insbesondere zu beschleunigen. Dies kann insbesondere mit Hilfe von Schweißplättchen oder unter Anwendung eines Lötkolbens oder Lötstempels erfolgen.

Sofern die Zusatz-Behandlung und Versiegelung im Bereich der Prägestellen nur durch Anwendung von Wärme erfolgen soll, so kann dies beispielsweise mit Hilfe von Schweißplättchen vorgenommen werden.

Eine andere Möglichkeit zur rein thermischen Behandlung bzw. Versiegelung im Bereich der Prägestellen besteht in der Anwendung eines Lötkolbens oder Lötstempels.

Im übrigen können als Überzugsmassen im Rahmen des erfindungsgemäßen Verfahrens alle geeigneten Werkstoffe benutzt werden, sofern sie eine Arbeitstemperatur der resultierenden Filterpatrone im Bereich von 60 bis 260°C, insbesondere im Bereich von 60 bis 120°C aushalten.

Aufgrund des vorliegenden erfindungsgemäßen Verfahrens besteht die vorteilhatte Möglichkeit, als Filtermedien auch in mechanischer Hinsicht verhältnismäßig empfindliche Werkstoffe zu verwenden, die in bestimmten Anwendungsfällen bevorzugt werden, beispielsweise ein Laminat, das aus einem Trägermaterial und einem expandierten Polytetrafluorethylen besteht.

Als Material für das Filtermedium kann beispielsweise auch ein Laminat zum Einsatz gelangen, das aus einem Trägermaterial und einem Glasfaser-Filtermaterial besteht. Als Trägermaterial für solche Laminate eignet sich z.B. Polyester. Im übrigen ist es auch möglich, als Material für das Filtermedium nur Glasfasern zu verwenden.

Bei allen derartigen Materialien, welche an sich als Filtermedien bekannt sind, läßt sich aufgrund des vorliegenden erfindungsgemäßen Herstellungsverfahrens im Bereich der Berührungspunkte der resultierenden Prägestellen eine relativ hohe mechanische Abriebfestigkeit erzielen, so daß bei Betrieb der Filterpatronen diese Filtermedien auch verhältnismäßig hohen Beanspruchungen standzuhalten vermögen.

Die vorliegende Erfindung wird nunmehr im Rahmen von Ausführungsbeispielen näher erläutert, wobei auf die beigefügten Zeichnungen Bezug genommen wird. Dabei zeigen:
- **Fig. 1**: eine schematische Schnittansicht durch ein Filtermedium, dessen eine Oberfläche mit einer Prägung versehen ist;
- **Fig. 2**: eine gegenüber der Darstellung in Fig. 1 noch etwas vergrößerte Schnittansicht des Filtermediums, wobei veranschaulicht ist, daß die mit der Prägung versehene Oberfläche des Filtermediums einer Zusatzbehandlung durch Auftragen einer aushärtbaren Überzogsmasse unterzogen worden ist;
- **Fig. 3**: eine schematische Schnittansicht durch einen Abschnitt einer anderen Ausführungsform eines Filtermediums, welches in Form eines Laminats vorliegt;
- Fig. 4: eine schematische Schnittansicht durch das Filtermedium gemäß Fig. 3, welches nunmehr auf einer Oberfläche mit einer erhabenen Prägung versehen ist und anschließend einer Zusatzbehandlung in Anwendung des erfindungsgemäßen Verfahrens unterworfen worden ist;
- **Fig. 5**: eine schematische, perspektivische Teil-Ansicht eines folienförmigen Abschnittes eines Filtermediums gemäß Fig. 2;
- **Fig. 6**: eine schematische Schnittansicht durch einen Abschnitt einer weiteren Ausführungsform eines Filtermediums, dessen beide Oberflächen mit einer erhabenen Prägung versehen sind;
- **Fig. 7**: eine schematische Schnittansicht durch zwei Abschnitte von Filtermedien gemäß Fig. 6, die mit ihren Oberflächen aneinander angrenzend angeordnet sind;
- **Fig. 8**: eine schematische Schnittansicht durch einen Abschnitt einer weiteren Ausführungsform eines Filtermediums, welches in diesem Falle nicht mit einer erhabenen Prägung auf wenigstens einer seiner Oberflächen versehen ist, sondern welches durch eine vorgegebene Anzahl von nietenförmigen Elementen durchsetzt ist, die auf beiden Seiten abgerundete Nietenköpfe aufweisen;
- **Fig. 9**: eine schematische, perspektivische Teil-Ansicht einer weiteren Ausführungsform eines Filtermediums mit auf einer seiner Oberflächen vorgesehenen erhabenen Prägestellen in Form von einer Anzahl parallel zueinander verlaufenden Rippen, die einer Zusatzbehandlung in Anwendung des erfindungsgemäßen Verfahrens unterzogen worden sind;
- **Fig. 9a**: eine zu derjenigen gemäß Fig. 9 ähnliche, jedoch abgewandelte Ausführungsform eines Filtermediums; und
- **Fig. 10**: eine schematische, perspektivische Ansicht einer Ausführungsform einer Filterpatrone, die mit einem erfindungsgemäß hergestellten Filtermedium versehen ist.

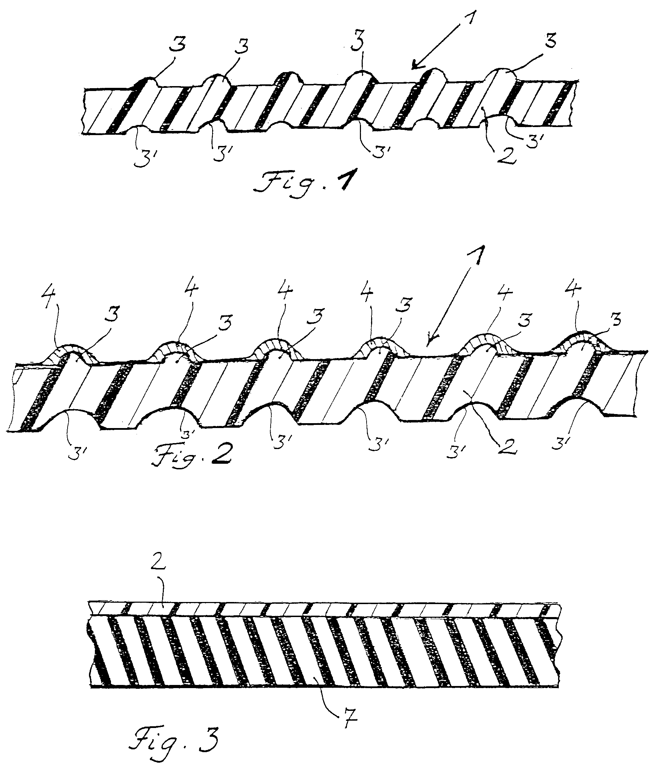

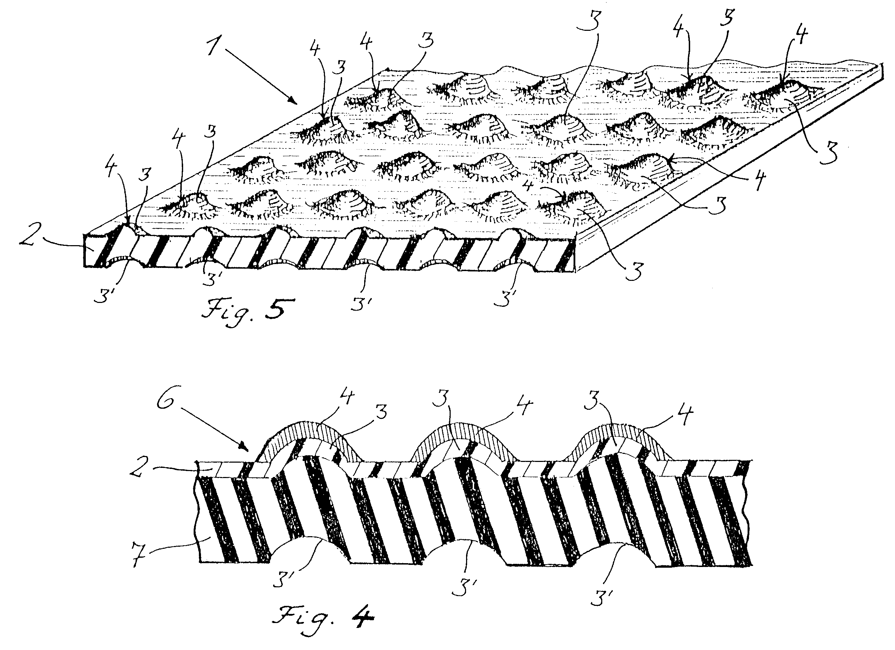

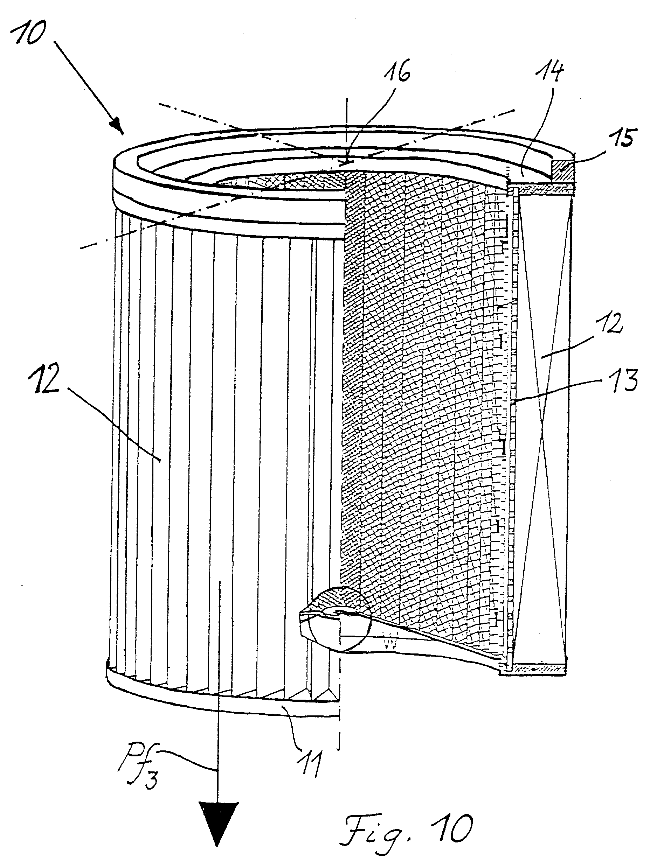

Wie aus Fig. 1 zu ersehen ist, besteht ein Filtermedium 1, das für die Herstellung einer Filterpatrone dient, wie weiter unten anhand der Fig. 10 erläutert wird, zunächst aus einem flächigen bzw. ebenen Filtermaterial 2, dessen eine Oberfläche mit einer erhabenen Prägung versehen ist, die aus einer Vielzahl von erhabenen, vorzugsweise noppenartig ausgebildeten Prägestellen 3 besteht. Diese Prägung wird beispielsweise dadurch erreicht, daß eine zunächst glatte Bahn aus diesem Filtermaterial 2 kontinuierlich durch eine aus Prägewalzen oder dergleichen bestehende Anordnung hindurchgeleitet wird. Die gegenüberliegende Oberfläche des Filtermaterials 2 erhält bei dieser Prozedur eine Anzahl von konkaven Eindrückungen 3', deren Gestalt der Noppenform der Prägestellen 3 auf der oberen Oberfläche des Filtermaterials 2 entspricht. Beispielsweise beträgt in reälistischer Ausführung die Stärke der Filtermaterial-Schicht 2 0,5 bis 1 mm, während die Höhe der noppenartigen Prägestellen ebenfalls zwischen 0,5 und 1 mm liegt.

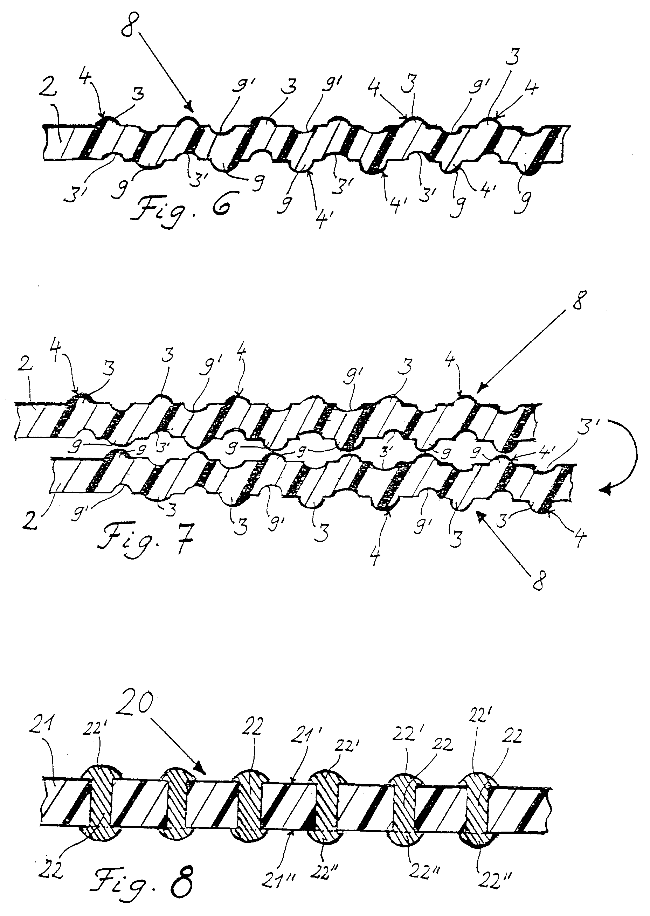

Im Anschluß an das Aufbringen dieser Prägung erfolgt erfindungsgemäß eine weitere Behandlung der Oberfläche des Filtermediums 1, wie dies anhand der Fig. 2 erläutert wird, wobei diese Zusatzbehandlung darin besteht, daß im Bereich der jeweiligen Prägestellen 3 eine Schicht aus einer aushärtbaren Überzugsmasse 4 aufgebracht wird. Eine solche Überzugsmasse 4 kann beispielsweise aus einem Kleber bestehen, mit dem die noppenartigen Erhebungen 3 überzogen und damit gleichsam versiegelt werden, um so zu erreichen, daß bei Betrieb der resultierenden Filterpatrone ein Abrieb des Filtermaterials an den jeweiligen Kontaktstellen, welche den erhabenen, noppenartigen Prägestellen 3 entsprechen, verhindert wird.

Wie bereits weiter oben erwähnt, dienen diese noppenartigen Prägestellen 3 dazu, eine Abstandshaltung der bei Betrieb der Filterpatrone kollabierenden Falten eines plissierten Faltenbalges bei der Anströmung mit dem zu reinigenden Gas und bei der Abreinigung zu gewährleisten. Aufgrund einer solchen Abstandshaltung kann verhindert werden, daß sich die wirksamen Filterflächen reduzieren.

Bei dem als Überzugsmasse 4 eingesetzten Kleber muß es sich um einen Kleber handeln, der mit dem Filtermaterial bzw. einer wirksamen Filterschicht des Filtermediums, z.B. Polytetrafluorethylen, verklebbar ist und nach dem Auftragen aushärtet. Hierzu bieten sich beispielsweise Einkomponenten- oder Mehrkomponentenkleber an, andererseits aber auch z.B. durch Abkühlung aushärtende, thermoplastische Materialien oder dergleichen.

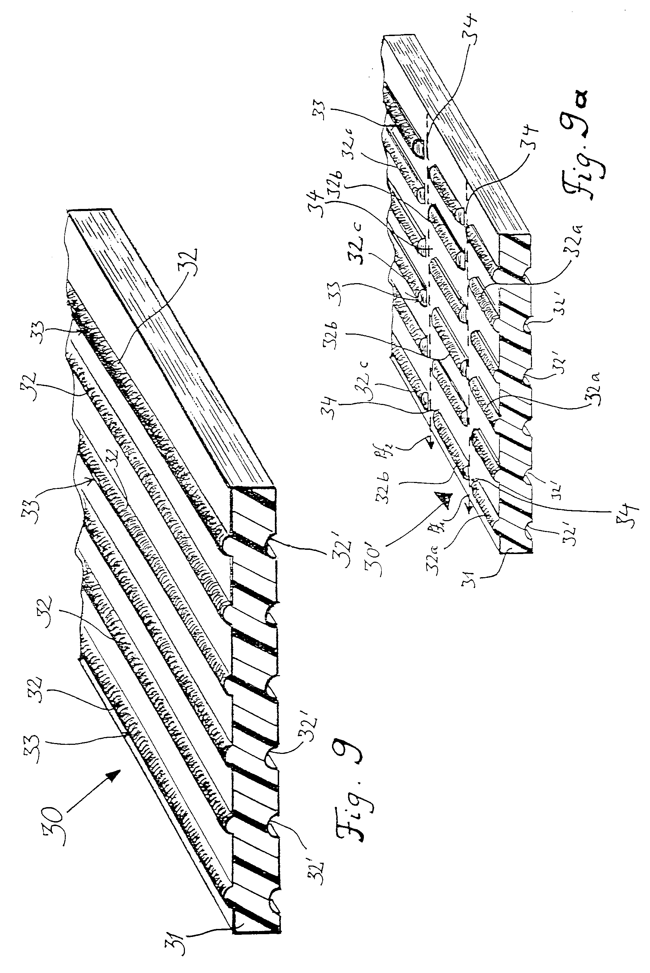

Im Unterschied zu dem Filtermedium gemäß den Fig. 1 und 2 zeigt nunmehr Fig. 3 ein Filtermedium, welches in der Form eines Laminats vorliegt, das sich aus einer Schicht aus einem Trägermaterial 7, z.B. Polyester sowie einer darüber angeordneten, wirksamen Filterschicht z.B. einer Schicht aus einem expandierten Polytetrafluorethylen 2 zusammensetzt. Aus diesem Laminat wird ein aus Fig. 4 ersichtliches Filtermedium 6 hergestellt, bei dem nach dem Aufbringen von erhabenen Prägestellen 3 auf der das expandierte PTFE 2 aufweisenden Oberfläche wiederum eine Zusatzbehandlung durch Auftragen einer Überzugsmasse 4 im Bereich dieser noppenartigen Erhebungen 3 erfolgt, in entsprechender Weise, wie dies bereits oben anhand der Fig. 1 und 2 erläutert worden ist. Die den noppenartigen Erhebungen 3 gegenüberliegende Oberfläche des Trägermaterials 7 trägt wiederum die komplementären, kalottenförmigen Eindrückungen oder Einbuchtungen 3', die aufgrund des angewandten Prägeverfahrens resultieren.

Aus Fig. 5 geht eine perspektivische Teil-Ansicht eines nach dem erfindungsgemäßen Verfahren hergestellten Filtermediums 1 hervor, wobei eine teilweise Ansicht der Oberfläche dieses Filtermediums gezeigt ist, die mit einer Vielzahl von noppenartigen Prägestellen 3 versehen ist, die ihrerseits wiederum mit einer Überzugsmasse 4 überzogen sind. Auf der gegenüberliegenden Oberfläche des Filtermediums 1 befinden sich wiederum die den noppenartigen Erhebungen 3 entsprechenden, konkaven Eindrückungen 3'.

Fig. 6 zeigt eine gegenüber den Ausführungen des Filtermediums 1 oder 6 nach den Fig. 1 bis 5 insofern abgewandelte Ausführungsform eines aus einem Filtermaterial 2 bestehenden Filtermediums 8, als dieses nunmehr auf beiden Oberflächen mit einer Vielzahl von erhabenen noppenartigen Prägestellen 3 und 9 versehen ist. Auch in diesem Falle sind die jeweiligen Prägestellen 3 und 9 einer Zusatzbehandlung durch Auftragen einer Schicht aus einer Überzugsmasse 4, 4' unterworfen worden, in gleicher Weise, wie dies bereits weiter oben erläutert worden ist. Es handelt sich gleichsam um eine Doppelprägung des Filtermediums 8. Wird dieses Filtermedium beispielsweise bei einer Filterpatrone in Form eines plissierten Faltenbalges eingesetzt, wie aus Fig. 10 ersichtlich, so wird verhindert, daß die Falten bei Betrieb der Filterpatrone sowohl auf der Reingasseite als auch auf der Rohgasseite kollabieren, wobei die Oberflächen des Filtermediums 8 zum gegenseitigen Aneinander- oder Aufeinanderliegen gelangen, wie anhand der Fig. 7 erläutert wird, sodaß wiederum die jeweiligen erhabenen Prägestellen 9 bzw. 3 auf den einander gegenüberliegenden Oberflächen des Filtermediums 8 bzw. der hieraus bestehenden Falten der Filterpatrone sich gegenseitig mehr oder weniger berühren, wie dies auch Fig. 7 im einzelnen zeigt.

Mit 9' sind die den Prägestellen 9 gegenüberliegenden komplementären, konkaven Eindrückungen in dem Filtermaterial 2 bezeichnet.

Somit ist die angestrebte Abstandshaltung der einander zugeordneten Falten der Filterpatrone sowohl auf der Anströmseite (Rohgasseite) als auch auf der Abströmseite (Reingasseite) der Filterpatrone gewährleistet.

Fig. 9 zeigt noch eine weitere Ausführungsform eines Filtermediums 30, das aus einem Glasfaser-Filtermaterial 31 besteht. Auf einer seiner Oberflächen weist dieses Material eine vorgegebene Anzahl von parallel zueinander verlaufenden rippenartigen Prägestellen 32 auf, die ihrerseits wiederum jeweils mit einer entsprechenden Schicht aus einer aushärtbaren oder austrockenbaren Überzugsmasse 33 überzogen sind. Auf der gegenüberliegenden Oberfläche des Glasfaser-Filtermaterials 31 befinden sich konkave Eindrückungen oder Einbuchtungen 32', die jeweils einer Prägerippe 32 gegenüberliegen und sich aufgrund des angewandten Prägeverfahrens ergeben.

Auch im Falle des Filtermediums 30 gemäß Fig. 9 besteht die Möglichkeit, dieses mit einer doppelseitigen Prägung zu versehen, derart, daß auf beiden Oberflächen sich Prägerippen 32 befinden, die ihrerseits wiederum jeweils mit einer Überzugsmasse 33 in Längsrichtung der Prägerippen 32 überzogen und damit versiegelt sind. Eine zusätzliche thermische Behandlung oder eine Versiegelung der Prägerippen 32 auf rein thermischem Wege ist denkbar.

Aus der Fig. 9a geht eine gegenüber der Ausführungsform des Filtermediums 30 nach Fig. 9 etwas abgewandelte Ausgestaltung eines Filtermediums 30' hervor, wobei im letzteren Falle die auf der einen Oberfläche des Filtermaterials 31 vorgesehenen Prägerippen nicht als in der Längsrichtung durchgehende Rippen ausgeprägt sind, sondern durch in regelmässigen gegenseitigen Abständen aufeinanderfolgende, relativ kurze schlitzförmige Unterbrechungsstellen 34 in eine Anzahl von einzelnen Rippenabschnitten 32a, 32b, 32c, ... unterteilt sind. Infolgedessen ergeben sich in der Querrichtung zur Ausrichtung dieser rippenförmigen Abschnitte gesehen, durch die miteinander fluchtenden schlitzförmigen Unterbrechungsstellen 34 Abfluß- oder Ablaufrinnen für den Staubkuchen ergeben, wie dies durch die Pfeile Pf₁, Pf₂ in Fig. 9a angedeutet ist. Bei Verwendung eines derartigen Filtermediums 30' in einer Filterpatrone, wie diese weiter unten anhand der Fig. 10 noch erläutert wird, kann beim Abreinigen der Oberfläche des Filtermediums 30' der entsprechend abgelöste Staubkuchen entlang dieser durch die Unterbrechungsstellen 34 gebildeten Ablauf-oder Abflußrinnen nach unten abfallen, ohne daß es durch die rippenförmigen Abschnitte der Prägung auf der Oberfläche des Filtermediums 30' zu einer Behinderung des Staub-Abfalles kommen könnte.

In der Fig. 10 ist ein Ausführungsbeispiel einer Filterpatrone 10 dargestellt, bei welcher ein nach dem Verfahren nach vorliegender Erfindung hergestelltes Filtermedium in die Form eines plissierten Faltenbalges 12 gebracht ist, der ein inneres zylindrisches Lochblech 13 umgibt. Diese Filterpatrone 10 weist ferner ein unteres Abschlußteil 11 und ein oberes Abschlußteil 14 in der Form eines Kreisringes auf, der einen zentralen Auslaß 16 umgibt. Die Filterpatrone 10 wird mit ihrem oberen Abschlußteil 14 an einem (nicht dargestellten) Montageboden befestigt, wobei die Abdichtung zu diesem Montageboden über eine Dichtung 15, z.B. Silikon-Dichtung, erfolgt.

Die Filterpatrone 10 gemäß Fig. 10 dient, wie bereits oben erwähnt, zur Staubabscheidung, wobei sie von außen nach innen durchströmt wird, d.h. die Rohgasseite ist außerhalb der Filterpatrone 10, während der Reingasraum über die Auslaßöffnung 16 mit dem Inneren der Filterpatrone 10 in Verbindung steht. Bei Betrieb dieser Filterpatrone 10 lagert sich ein Staubkuchen auf der Oberfläche des Filtermediums 12 ab und beim Abreinigen fällt dieser Staubkuchen nach unten, wobei die Richtung des abfallenden Staubkuchens durch einen Pfeil Pf₃ angedeutet ist.

Da für den Faltenbalg 12 eines der Filtermedien verwendet wird, wie diese anhand der Fig. 1 bis 9a erläutert sind, wird verhindert, daß bei der Abreinigung es zu einer Kollabierung der Falten des Faltenbalges 12 auf der Rohgasseite kommt, gegebenenfalls aber auch gleichzeitig auf der Reingasseite, d.h., es wird zumindest verhindert, daß bei der Anströmung und Abreinigung die Falten kollabieren und es damit zu einer Reduzierung der wirksamen Filterfläche durch Aufeinanderlegen der Falten kommen könnte. Bei doppelseitig geprägten Filtermedien, wie anhand der Fig. 6 und 7 erläutert, wird ebenfalls eine Kollabierung auf der Reingasseite der Filterpatrone, d.h. im Falle der Abströmung bei der Filterpatrone verhindert.

An den gegenseitigen Berührungspunkten der jeweiligen noppenartigen Prägestellen 3 und 9 bzw. der Prägerippen 32 des jeweiligen Filtermediums 1 oder 6 oder 8 oder 30 oder 30' kann es aufgrund des erfindungsgemäßen Verfahrens zur Herstellung des jeweiligen Filtermediums nicht zu einem Schadhaftwerden des empfindlichen Filter-Materials, beispielsweise des expandierten PTFE kommen, da diese Prägestellen bzw. Prägerippen durch die aufgetragene Überzugsmasse 4, 4' oder 33 beschichtet und damit versiegelt sind, welche einen Abrieb und damit einen Verschleiß des jeweiligen Filtermediums verhindert.

Fig. 8 zeigt ein weiteres Ausführungsbeispiel eines Filtermediums 20, welches aus einem flächigen bzw. im wesentlichen ebenen Filtermaterials 21 besteht, wobei in diesem Falle anstelle einer Prägung eine vorgegebene Anzahl von nietenförmigen Elementen 22 vorgesehen ist, welche dieses Filtermaterial 21 durchsetzen und welche auf den einander gegenüberliegenden Oberflächen 21' und 21'' des Filtermaterials 21 jeweils mit beiderseitigen Nietenköpfen 22' und 22'' versehen sind. Derartige, beispielsweise aus Kunststoff bestehenden Nieten 22 durchdringen völlig das Filtermaterial 21 und dieses Material wird gleichsam mittels der beiderseitigen Nietenköpfe 22' und 22'' verpreßt, d.h. es erfolgt auf diese Art und Weise eine Abdichtung zwischen den beiderseitigen Oberflächen 21' und 21'' des Filtermaterials 21. Diese nietenförmigen Elemente 22 können beispielsweise druckknopfartig ausgebildet sein, d.h., sie bestehen beispielsweise aus zwei Teilen, die druckknopfartig zusammengesetzt werden, wenn die Durchdringung durch das Filtermaterial 21 erfolgt ist.

Aufgrund der abgerundeten Nietenköpfe 22' und 22'' wird in analoger Weise die angestrebte Abstandshaltung der einzelnen Filter-Falten bei Betrieb der aus einem solchen Filtermedium 20 hergestellten Filterpatronen in der Form eines plissierten Faltenbalges gewährleistet, wie dies bereits weiter oben im Zusammenhang mit geprägten Filtermedien im einzelnen erläutert wurde.

## Patentansprüche

1. Verfahren zur Herstellung eines Filtermediums, wobei auf wenigstens eine Oberfläche des Filtermediums eine Prägung in Form einer Vielzahl von erhabenen, insbesondere noppen- oder rippenartigen Prägestellen aufgebracht und das Filtermedium zu einem plissierten Faltenbalg für eine Filterpatrone zur Staubabscheidung geformt wird,
**dadurch gekennzeichnet,**
daß zur Verbesserung der Abriebfestigkeit im Bereich der Prägestellen (3; 9; 32) ausschließlich diese mit einer aushärtbaren/austrockenbaren Überzugsmasse (4; 33) beschichtet und/oder einer Behandlung durch Anwendung von Wärme unterworfen werden.

2. Verfahren nach Anspruch 1,
**dadurch gekennzeichnet,**
daß als Überzugsmasse (4; 33) ein Kleber, insbesondere ein Einkomponentenkleber oder ein Mehrkomponentenkleber oder dergleichen verwendet wird.

3. Verfahren nach Anspruch 1,
**dadurch gekennzeichnet,**
daß als Überzugsmasse (4; 33) ein durch Abkühlung aushärtendes, thermoplastisches Material, wie Polyethylen, Polypropylen, Polyester, oder ein Hochtemperatur-Thermoplast, wie z.B. Fluorethylenpropylen oder Perfluoralkoxy oder dergleichen verwendet wird.

4. Verfahren nach Anspruch 1,
**dadurch gekennzeichnet,**
daß als Übezugsmasse (4; 33) vorgefertigte Kleber- oder Kunststoffnetze verwendet werden.

5. Verfahren nach Anspruch 1,
**dadurch gekennzeichnet,**
daß als Überzugsmasse (4; 33) Silikon verwendet wird.

6. Verfahren nach Anspruch 1,
**dadurch gekennzeichnet,**
daß als Überzugsmasse (4; 33) eine Heißschmelzmasse verwendet wird.

7. Verfahren nach Anspruch 1,
**dadurch gekennzeichnet,**
daß als Überzugsmasse (4; 33) ein Lack verwendet wird.

8. Verfahren nach einem der vorhergehenden Ansprüche,
**dadurch gekennzeichnet,**
daß die mit der Überzugsmasse (4; 33) überzogenen Prägestellen (3; 9; 32) einer zusätzlichen thermischen Behandlung mit Hilfe von Schweißplättchen unterworfen werden.

9. Verfahren nach einem der Ansprüche 1 bis 7,
**dadurch gekennzeichnet,**
daß die mit der Überzugsmasse (4; 33) überzogenen Prägestellen (3; 9; 32) einer zusätzlichen thermischen Behandlung unter Anwendung eines Lötkolbens/-Stempels unterworfen werden.

10. Verfahren nach Anspruch 1,
**dadurch gekennzeichnet,**
daß die rein thermische Behandlung bzw. Versiegelung im Bereich der Prägestellen (3; 9; 32) unter Anwendung eines Lötkolbens/Stempels vorgenommen wird.

11. Verfahren nach Anspruch 1,
**dadurch gekennzeichnet,**
daß die rein thermische Behandlung bzw. Versiegelung im Bereich der Prägestellen (3; 9; 32) mittels Schweißplättchen erfolgt.

12. Verfahren nach einem der Ansprüche 1 bis 11,
**dadurch gekennzeichnet,**
daß als Material für das Filtermedium (1; 6; 8; 30) ein aus einem Trägermaterial (7) und einem expandierten PTFE (2) bestehendes Laminat verwendet wird.

13. Verfahren nach einem der Ansprüche 1 bis 11,
**dadurch gekennzeichnet,**
daß als Material für das Filtermedium (1; 6; 8; 30) ein aus einem Trägermaterial (7) und einem Glasfaser-Filtermaterial bestehendes Laminat verwendet wird.

14. Verfahren nach einem der Ansprüche 1 bis 11,
**dadurch gekennzeichnet,**
daß als Material für das Filtermedium (1; 6; 8; 30) Glasfasern verwendet werden.

15. Filtermedium,
**dadurch gekennzeichnet,**
daß es nach dem Verfahren gemäß einem der Ansprüche 1 bis 14 hergestellt ist.
